# EUROPÄISCHE PATENTSCHRIFT

(11) **EP 1 057 513 B1**
(45) Veröffentlichungstag und Bekanntmachung des Hinweises auf die Patenterteilung: **04.02.2004**
(21) Anmeldenummer: 00110926.3
(22) Anmeldetag: 25.05.2000
(51) Int. Cl.: B01D 46/22

(54) **Vorfilterelement mit Filtervlies**
Prefilter element with non-woven filter material
Elément préfiltre à matériau de filtre non tissé

(30) Priorität: 31.05.1999 DE 29909484 U
(43) Veröffentlichungstag der Anmeldung: 06.12.2000
(73) Patentinhaber: LTA Lufttechnik GmbH, 77787 Nordrach (DE)
(72) Erfinder: Mayer, Rochus, 77736 Zech a. H. (DE)
(74) Vertreter: Leske, Thomas, Dr.

(56) Entgegenhaltungen:
- EP-A- 0 705 633
- DE-A- 2 214 044
- DE-A- 4 300 837
- FR-A- 1 487 869
- US-A- 5 560 835

## Beschreibung

Die vorliegende Erfindung betrifft ein Vorfilterelement insbesondere zum Einsatz vor einem Feinstfilter, wobei das Vorfilterelement ein Filtervlies aufweist.

Bekannt ist es, daß als Vorfilter Drallabscheider, Streckmetallfilter oder Zentrifugen eingesetzt werden. Diese haben zur Aufgabe, grobe Schmutzpartikel oder andere zu entfernende Verunreinigungen aus beispielsweise Umgebungsluft herauszufiltem. Ein nachfolgender Feinstfilter wird dann nur noch mit Verunreinigungen kleineren Durchmessers beaufschlagt.

Aus der EP 0 705 633 A1 ist ein Vorfilterelement gemäß dem Oberbegriff des Anspruchs 1 bekannt. Dieses Vorfilterelement ist zum Einsatz in teilweise abgeschlossenen Arbeitsbereichen, wie etwa in Tunnels oder in Arbeitsräumen vorgesehen. Es dient dazu, einen wesentlichen Anteil des großkörnigen Staubanteils festzuhalten, der beim Arbeiten in Tunnels oder in Arbeitsräumen auftritt. Dieses bekannte Vorfilterelement arbeitet mit einem Filterband, das quer zu einem Luftstrom von einer Vorratsrolle abgewickelt und auf einer Aufnahmerolle aufgewickelt wird. Wenn ein Abschnitt des Filterbandes mit Staub beladen ist, so ist das Filterband um die Länge dieses Abschnittes zu verschieben und auf die Aufnahmerolle aufzuwickeln, damit wieder ein frischer Abschnitt des Filterbandes im Luftstrom angeordnet wird. Die Entstaubung muß dabei nicht unterbrochen werden. Wenn die ganze Vorratsrolle des Filterbandes abgewickelt ist, muß eine neue Vorratsrolle eingesetzt werden.

Das bekannte Filterband erfordert somit eine Vorratsrolle und eine Aufnahmerolle, die beide jeweils die gesamte Filterlänge im aufgewickelten Zustand aufnehmen müssen. Für lange unterbrechungsfreie Betriebsphasen sind lange Filterbänder erforderlich, die im aufgewickelten Zustand Trommeln von einem erheblichen Durchmesser bilden. Zusätzlich zu der Vorratsrolle und der Aufnahmerolle sind auch noch Umlenkrollen erforderlich. Das bekannte Vorfilterelement erfordert somit einen erheblichen Bau- und Raumaufwand. Das Auswechseln des verschmutzten Filtervlieses muß in regelmäßigen Abständen erfolgen und bedeutet eine unangenehme Arbeit.

Aufgabe der vorliegenden Erfindung ist es nun, ein Vorfilterelement zu schaffen, welches von sich aus eine hohe Standzeit mit geringem Wartungsaufwand zur Verfügung stellt, gleichzeitig aber auch in der Lage ist, vernebelte Öl- und Emulsionspartikel mittels eines Filtervlieses auszufiltern.

Diese Aufgabe wird mit einem Vorfilterelement mit den Merkmalen des Anspruchs 1 gelöst. Vorteilhafte Weiterbildungen und Ausgestaltungen sind in den abhängigen Ansprüchen angegeben.

Ein Vorfilterelement, insbesondere zum Einsatz vor einem Feinstfilter, wobei das Vorfilterelement ein Filtervlies aufweist, hat ein Filtervlies, welches endlos geschlossen ist und über einen Querschnitt des Vorfilterelementes verlaufend drehbar im Filterelement zum Filtern angeordnet ist. Dadurch, daß das Filtervlies endlos geschlossen ist, wird ermöglicht, daß eine jeweils von der zu reinigenden Luft angeströmte Oberfläche des Filtervlieses beweglich im Vorfilterelement verschoben werden kann. Das Filtervlies ist daher über den Querschnitt des Vorfilterelementes so angeordnet, daß es über diesen drehbar verläuft. Aufgrund dessen wechselt die angeströmte Oberfläche. Damit wird nicht nur eine einzige, permanent feststehende Oberfläche des Filtervlieses angeströmt, vielmehr wechselt diese.

Eine vorteilhafte Ausgestaltung sieht vor, daß das Filtervlies eine Endlosschlaufe bildet, die zumindest um eine erste und eine zweite Umlenkung herum aufgespannt angeordnet ist. Die Bildung einer Endlosschlaufe ermöglicht, daß das Filtervlies stetig gedreht werden kann, ohne daß ein begrenzender Anfang bzw. ein begrenzendes Ende für die Drehbewegung definiert ist. Durch die Aufspannung zwischen einer ersten und einer zweiten Umlenkung wird auch der Drehweg über den Querschnitt des Vorfilterelementes festgelegt. Die Aufspannung ist ,insbesondere so, daß das Filtervlies zum einen eine gewisse Haftung an der Umlenkung aufweist, zum anderen aber aufgrund der Eigenspannung im Filtervlies eine gewisse Flexibilität und Elastizität zur Verfügung gestellt wird. Die erste bzw. zweite Umlenkung werden beispielsweise durch Umlenkrollen gebildet. Dabei bildet das um die Umlenkungen herum aufgespannte Filtervlies eine Vor- und Nachfiltereinheit. Während die zu reinigende Luft auf eine erste Seite des Filtervlieses auftrifft, anschließend eine erste Dicke des Filtervlieses durchströmt, gelangt es danach in einen Zwischenraum, der durch die Geometrie der zumindest ersten und zweiten Umlenkung gebildet wird. Anschließend gelangt die zu reinigende und somit schon vorgefilterte Luft wiederum auf das Filtervlies, diesmal auf eine innen, zu den Umlenkungen angeordnete Oberfläche des Filtervlieses. Von dort durchströmt die zu reinigende Luft das Filtervlies wiederum und tritt dann an der zur innenliegenden Oberfläche entgegengesetzten außenliegenden Oberfläche des Filtervlieses wieder aus.

Eine Weiterbildung des Vorfilterelementes sieht vor, daß die erste Umlenkung ein Antrieb zum Umlaufen des Filtervlieses über den Querschnitt des Vorfilterelementes ist. Der Antrieb ist beispielsweise ein Elektromotor, der direkt eine Umlenkungsrolle antreibt. Der Antrieb ist gesteuert oder geregelt. Dieses kann über eine Elektronik des Vorfilterelementes selbst oder aber eines nachfolgenden Hauptfilters erfolgen. Neben eines kontinuierlichen Antriebs des Filtervlieses, was zu einer stetigen Drehung über den Querschnitt des Vorfilterelementes führt, besteht weiterhin die Möglichkeit, den Antrieb so zu steuern oder zu regeln, daß eine Bewegung des Filtervlieses nur in Zeitabständen erfolgt. Dieses ist beispielsweise von der Größe der Verunreinigung in der zu reinigenden Luft abhängig. Auch spielt es eine Rolle, mit welcher Geschwindigkeit das Filtervlies über den Querschnitt des Vorfilterelementes gedreht wird. Hierbei soll insbesondere vermieden werden, daß große Turbulenzen auftreten. Diese Verwirbelungen führen ansonsten zu einem Druckverlust über das Vorfilterelement, welcher über ein an das Vorfilterelement angeschlossenes Gebläse ausgeglichen werden muß.

Weiterhin ist es vorteilhaft, wenn die erste und die zweite Umlenkung zueinander beweglich und in ihrem Abstand zueinander arretierbar sind. Dieses erlaubt eine Vereinfachung des Wechsels des Filtervlieses. Soll das Filtervlies herausgenommen werden, wird der Abstand zwischen beiden Umlenkungen verringert. Die bis dahin existierende Eigenspannung des Filtervlieses läßt nach. Das Filtervlies ist dann mühelos von den Umlenkungen abnehmbar. Ein neues Filtervlies kann dann anschließend über die Umlenkungen gelegt werden, ohne daß das Filtervlies dann schon unter Eigenspannung steht. Bei einer nachfolgenden Verschiebung der Umlenkungen zueinander zur Erhöhung ihres gegenseitigen Abstandes wird eine Eigenspannung auf das Filtervlies aufgebracht. Diese preßt dann das Filtervlies an die Umlenkungen an, so daß das neueingesetzte Filtervlies einer Rotationsbewegung des Antriebs schlupflos folgen kann. Eine Weiterbildung sieht vor, daß neben der ersten und der zweiten Umlenkung, die den maßgeblichen Verlaufsweg des Filtervlieses über den Querschnitt des Vorfilterelementes festlegen, zumindest eine dritte Umlenkung vorhanden ist. Diese ist verschiebbar angeordnet, so daß damit eine Nachspannung des Filtervlieses möglich ist. Im Betrieb kann aufgrund des Aufbaus des Filtervlieses es dazu kommen, daß sich das Material ausreckt. Die Nachstellmöglichkeit der Spannung auf das Filtervlies über eine dritte Umlenkung stellt sicher, daß der Antrieb immer wirksam bleibt.

Neben dem Antrieb weist das Vorfilterelement auch eine Vorrichtung zum Zusammenpressen des Filtervlieses auf. Diese Vorrichtung zum Zusammenpressen reinigt das Filtervlies. Durch den Einsatz als Vorfilterelement nimmt das Filtervlies zum überwiegenden Teil grobe Schmutzpartikel sowie große Öl- oder Emulsionspartikel auf. Dieser Nebel wird durch das Filtervlies aufgesaugt und als angesammelte Flüssigkeit über die Vorrichtung aufgrund des Zusammenpressens ausgepreßt. Vorzugsweise ist die Vorrichtung zumindest in der Nähe eines Umkehrpunktes des Filtervlieses angeordnet, insbesondere an einem bezüglich der Schwerkraft unteren Umkehrpunkt. Zum einen nutzt dieses die natürliche Richtung von ausgepreßten Tropfen aus dem Filtervlies nach unten der Schwerkraft folgend aus. Dieses ist unterstützbar durch entsprechend definierte Sicken und Abläufe in dem Vorfilterelement, so daß das abgefilterte Medium gezielt gesammelt wird und abgeleitet werden kann. Dieses vermeidet eine Ansammlung von groben Partikeln auf dem Gehäuseboden.

Eine zusätzliche Ausgestaltung sieht vor, daß die Vorrichtung zum Zusammenpressen des Filtervlieses einen variierbaren Anpressdruck auf das Filtervlies ausübt. Dieses ist beispielsweise mittels einer Anpressrolle möglich, deren Abstand beispielsweise zu einer Umlenkrolle einstellbar variierbar ist. Damit kann die Vorrichtung auf verschiedene Vliesstoffe und damit Filtervliese spezifisch eingestellt werden. Weiterhin ist es vorteilhaft, wenn die Vorrichtung zumindest aus der ersten und/oder der zweiten Umlenkung und einem Anpressmittel besteht, wobei der ersten und/oder zweiten Umlenkung gegenüber zumindest das Anpressmittel, insbesondere eine Anpressrolle, zum Zusammenpressen des Filtervlieses angeordnet ist. Auf diese Weise wird eine Vergrößerung der notwendigen Bauteile im Vorfilterelement vermieden. Weiterhin erlaubt das Zusammenwirken des Anpressmittels mit einer Umlenkung, die gleichzeitig den Antrieb darstellt, daß das Filtervlies schlupflos im Vorfilterelement bewegt wird. Eine ansonsten notwendige Reibung zwischen dem Antrieb und dem Filtervlies, die über die Eigenspannung des Filtervlieses aufzubringen wäre, kann auf diese Weise vermindert werden. Dieses erhöht die Langzeitbeständigkeit des Filtervlieses. Das Anpressmittel, welches in eine Anpressposition bewegbar ist, insbesondere verschwenkbar, wird vorzugsweise benachbart zum unteren Umkehrpunkt auf einer Seite angeordnet, an der das Filtervlies wieder zu einem oberen Umkehrpunkt verläuft. Dadurch kann zum einen die Schwerkraft zur Abführung des herausgefilterten Mediums genutzt werden. Zum anderen werden dadurch insbesondere die kurz vorher auf das Filtervlies aufgetroffenen Partikel sofort aus dem Filtervlies entfernt, bevor sie allzu weit in das Innere des Filtervlieses eindringen konnten.

Eine Weiterbildung sieht vor, daß das Vorfilterelement zumindest ein erste, vorgeschaltete Filterstufe hat. Diese ist insbesondere so ausgestaltet, daß grobe Schmutzpartikel und große Öl- oder Emulsionspartikel beispielsweise mit Hilfe eines Drallabscheiders abgeschieden werden. Diese Filterstufe verhindert, daß das nachfolgende Filtervlies in relativ kurzer Zeit mit Partikeln vollgesogen ist, die mittels anderer mechanischer Filtermittel vorab problemlos herausfilterbar sind. In der nachfolgenden nächsten Filterstufe, dem beispielsweise kontinuierlich umlaufenden Filtervlies, werden die verbliebenen Öl- und Emulsionspartikel aufgesaugt. Das Filtervlies bildet dabei einen Agglomerator. Kleinste Partikel sammeln sich im Vlies, bilden größere Tropfen, die aus dem Filtervlies sich wieder lösen und entweder über die Reinigung des Filtervlieses selbst, beispielsweise mittels der Vorrichtung zum Zusammenpressen des Filtervlieses, herausgeführt werden, oder aber über einen nachfolgenden Filter aus der zu reinigenden Luft abgeschieden werden. Gemäß einer bevorzugten Ausführungsform bildet das Vorfilterelement mit zumindest einem nachfolgenden Filter ein Filtersystem. Beispielsweise ist das nachfolgende Filter ein Drallabscheider, in dem agglomeratisierte Tropfen abgeschieden werden können.

Eine weitere Ausgestaltung des Vorfilterelementes sieht vor, daß dieses modular erweiterbar ist. Zum einen können weitere vor- bzw. nachfolgende Filter, beispielsweise in Form von Filtereinschüben, eingesetzt werden. Andererseits ist es ebenfalls möglich, daß das Vorfilterelement unabhängig von einem Feinstfilter eingesetzt wird. Beispielsweise ist das Vorfilterelement in ein Rohrleitungssystem integrierbar, wobei die Reinigungsleistung entsprechend des verwendeten Filtervlieses so einstellbar ist, daß entsprechende Reinigungsanforderungen eingehalten werden.

Der Zustand des Vorfilterelementes, insbesondere des Filtervlieses, ist beispielsweise mittels einer Differenzdruckeinrichtung überwachbar. Über den Differenzdruck kann auf das Zusetzen des Vliesstoffes durch Schmutzpartikel geschlossen werden. Eine entsprechende Auswertung des aufgenommenen Signales kann eine entsprechende Reinigung des Vliesstoffes bewirken, beispielsweise durch eine zusätzliche integrierte Waschvorrichtung. Auch kann bei Überschreiten eines maximal tolerierbaren Differenzdruckes ein Signal ausgelöst werden. Dieses Signal zeigt dem Nutzer des Vorfilterelementes an, daß das Filtervlies ausgewechselt werden muß. Zur Verbesserung der Integrierung des Vorfilterelementes ist dieses vorzugsweise fest in einem Gehäuse angeordnet, während vor- bzw. nachfolgende Filter in Form von Einschüben in das Gehäuse einsetzbar sind. Auf diese Weise läßt sich der notwendige Wartungsaufwand verringern. Zum anderen ermöglicht dieses, daß ein Wechseln des Filtervlieses ohne spezielles Werkzeug möglich ist. Eine besondere Ausbildung des Nutzers des Vorfilterelementes ist damit nicht erforderlich.

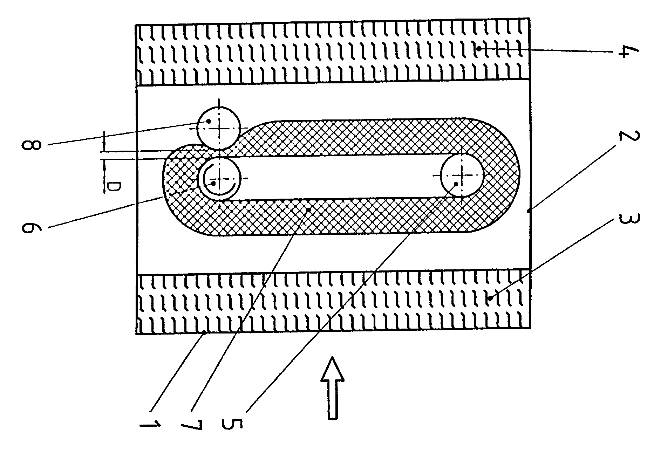

Weitere vorteilhafte Merkmale sind in der nachfolgenden Zeichnung näher erläutert. Diese Merkmale sind mit den bisherigen zu weiteren zweckmäßigen Ausgestaltungen kombinierbar. Es zeigt die Zeichnung ein Vorfilterelement mit einer vorgeschalteten und nachgeschalteten Filterstufe.

In einem Vorfiltergehäuse 1 ist ein Vorfilterelement 2, ein erster Filtereinschub 3 sowie ein zweiter Filtereinschub 4 angeordnet. Der erste Filtereinschub 3 und der zweite Filtereinschub 4 sind jeweils ein Drallabscheider. Das Vorfilterelement 2 weist eine Umlenkrolle 5 auf, die freilaufend ist. Ihr gegenüber angeordnet ist eine Antriebsrolle 6, die gleichzeitig einen Antriebsmotor für das um die Umlenkrolle 5 und die Antriebsrolle 6 angeordnete Filtervlies bildet. Der Antriebsrolle 6 benachbart zugeordnet ist eine Anpressrolle 8. Diese ist in ihrem Abstand D zur Antriebsrolle 6 verschieblich feststellbar. Damit ist der Abstand D an verschiedene Parameter, wie beispielsweise dem Verschleißzustand des Filtervlieses 7, der Rotationsgeschwindigkeit der Antriebsrolle 6, der Partikelbeladung des zu reinigenden Luftstromes, etc. anpaßbar. Das Filtervlies 7, welches sich über einen Querschnitt des Vorfilterelementes 2 erstreckt, regeneriert sich aufgrund der Vorrichtung aus Antriebsrolle 6 und Anpressrolle 8 während der durch den Pfeil an der Antriebsrolle 6 dargestellten Rotationsbewegung von selbst. Der Aufbau des Vorfilterelementes 2 im Zusammenspiel mit dem ersten Filtereinschub 3 und dem zweiten Filtereinschub 4 vermeidet die Erzeugung von turbulenter Strömung. Um zum einen den Druckabfall über das Vorfilterelement 2 zu minimieren, zum anderen den anströmenden Luftstrom nicht an dem Filtervlies 7 vorbeizuführen, weist das Vorfiltergehäuse vorzugsweise entsprechende Strömungsführungen auf. Beispielsweise wird dadurch der Querschnitt des Vorfiltergehäuses 1 im Vorfilterelement 2 so verengt, daß nur minimale Luftströmungen nicht durch das Filtervlies 7 hindurchströmen. Beispielsweise können dazu flexible, elastische Absperrungen, zum Beispiel in Form einer Dichtlippe, auf das Filtervlies aufdrücken. Diese haben in einer Weiterbildung mitdrehende Rollen oder ähnliches, so daß der Reibwiderstand minimiert ist. Das Filtervlies 7 wiederum ist so im Vorfilterelement 2 angeordnet, daß es ohne Werkzeug auswechselbar ist. Vorzugsweise ist das Filtervlies 7 auswaschbar und damit wiederverwendbar. Dieses erlaubt, daß die Nutzungsdauer eines derartigen Filtervlieses 7 verlängert werden kann. Die Standzeit im Vorfilterelement 2 hängt jedoch im wesentlichen von der Umlaufgeschwindigkeit und dem Anteil an Festpartikeln ab.

Das Haupteinsatzgebiet des Vorfilterelementes betrifft die Abfilterung von Umgebungsluft mit vernebelten Öl- und Emulsionspartikeln. Aufgrund des erreichbaren hohen Abscheidegrades werden nachgeschaltete Feinstfilter entlastet. Dadurch verlängert sich deren Standdauer erheblich. Aufgrund des verpfändeten Filtervlieses gelingt es, daß auf ein elektrostatisches Abscheideprinzip verzichtet werden kann. Selbst stark leitende Gemische können abgesaugt und gefiltert werden. Aufgrund des Verzichtes auf ein elektrostatisches Abscheideprinzip entsteht weiterhin keinerlei Ozonbildung. Eine entsprechende Absaugeinrichtung für das Ozon entfällt damit ebenfalls. Damit ist das Vorfilterelement variabel einsetzbar, beispielsweise für mehrfache Absaugstellen, für die es als eine zentrale Vorfilterung dienen kann. Weiterhin gestaltet die Verwendung eines Filtervlieses in Form einer geschlossenen Endlosschlaufe, daß aufgrund dessen eine besonders sorgfältige Ausfilterung aufgrund der dadurch vorhandenen Aufteilung des Filtervlieses in eine Vor- und Nachfiltereinheit gegeben ist.

## Patentansprüche

1. Vorfilterelement (2) zum Einsatz vor einem Feinfilter, mit einem Filtervlies (7), das über einen Querschnitt des Vorfilterelements (2) verlaufend zum Filtern in diesem umlaufend angeordnet ist, **dadurch gekennzeichnet, daß** das Filtervlies (7) eine Endlosschlaufe bildet, die zumindest um eine erste (6) und eine zweite (5) Umlenkung herum umlaufend aufgespannt angeordnet ist, und daß das Vorfilterelement (2) eine Vorrichtung zum Zusammenpressen des Filtervlieses (7) aufweist, die aus der ersten und/oder zweiten Umlenkung (5, 6) und einem Anpreßmittel (8) besteht, das gegenüber der ersten und/oder zweiten Umlenkung (5, 6) zum Zusammenpressen des Filtervlieses (7) angeordnet ist.

2. Vorfilterelement (2) nach Anspruch 1, **dadurch gekennzeichnet, daß** die erste und/oder zweite Umlenkung (5, 6) als Umlenkrollen ausgebildet sind und daß das Anpreßmittel (8) eine Anpreßrolle ist.

3. Vorfilterelement (2) nach Anspruch 1 oder 2, **dadurch gekennzeichnet, daß** die erste Umlenkung (6) ein Antrieb zum Umlaufen des Filtervlieses (7) über den Querschnitt des Vorfilterelements (2) ist.

4. Vorfilterelement (2) nach Anspruch 1, 2 oder 3, **dadurch gekennzeichnet, daß** die erste (6) und die zweite (5) Umlenkung zueinander beweglich und in ihrem Abstand zueinander arretierbar sind.

5. Vorfilterelement (2) nach einem der vorhergehenden Ansprüche, **dadurch gekennzeichnet, daß** die Vorrichtung zum Zusammenpressen des Filtervlieses (7) an einem bezüglich der Schwerkraft unteren Umkehrpunkt des umlaufenden Filtervlieses (7) angeordnet ist.

6. Vorfilterelement (2) nach einem der Ansprüche 1 bis 5, **dadurch gekennzeichnet, daß** das Anpreßmittel (8) in eine Anpreßposition bewegbar ist, insbesondere verschwenkbar.

7. Vorfilterelement (2) nach Anspruch 5 oder 6, **dadurch gekennzeichnet, daß** das Anpreßmittel (8) benachbart zum unteren Umkehrpunkt auf einer Seite angeordnet ist, an der das Filtervlies (7) wieder zu einem oberen Umkehrpunkt verläuft.

8. Vorfilterelement (2) nach einem der vorhergehenden Ansprüche, **dadurch gekennzeichnet, daß** das Vorfilterelement (2) zumindest eine erste, vorgeschaltete Filterstufe (3 ) hat.

9. Vorfilterelement (2) nach Anspruch 8, **dadurch gekennzeichnet, daß** die erste Filterstufe (3) ein Drallabscheider ist.

10. Vorfilterelement (2) nach einem der vorhergehenden Ansprüche, **dadurch gekennzeichnet, daß** dieses zumindest einen nachfolgenden Filter (4) hat.

## Claims

1. Prefilter element (2) for use in front of a fine filter, having a non-woven filter material (7), which is disposed extending across a cross-section of the prefilter element (2) and rotating for filtering inside the latter, **characterised in that** the filter non-woven material (7) forms an endless loop, which is disposed in a tensioned manner rotating around a first (6) and a second (5) deflector, and **in that** the prefilter element (2) has a device for compressing the filter non-woven material (7), which device comprises the first and/or second deflector (5, 6) and a pressing means (8), which is disposed opposite the first and/or second deflector (5, 6) in order to compress the filter non-woven material (7) .

2. Prefilter element (2) according to claim 1, **characterised in that** the first and/or second deflector (5, 6) are configured as deflection rollers, and **in that** the pressing means (8) is a pressure roller.

3. Prefilter element (2) according to claim 1 or 2, **characterised in that** the first deflector (6) is a drive for rotating the filter non-woven material (7) across the cross-section of the prefilter element (2).

4. Prefilter element (2) according to claim 1, 2 or 3, **characterised in that** the first (6) and the second (5) deflector are movable relative to each other and can be locked at their mutual spacing.

5. Prefilter element (2) according to one of the preceding claims, **characterised in that** the device for compressing the filter non-woven material (7) is disposed on a lower turning point, relative to gravity, of the rotating filter non-woven material (7) .

6. Prefilter element (2) according to one of the claims 1 to 5, **characterised in that** the pressing means (8) is movable into a pressing position, in particular is pivotable.

7. Prefilter (2) according to claim 5 or 6, **characterised in that** the pressure means (8) is disposed adjacent to the lower turning point on one side, on which the filter non-woven material (7) extends again to an upper turning point.

8. Prefilter element (2) according to one of the preceding claims, **characterised in that** the prefilter element (2) has at least one preceding filter step (3).

9. Prefilter element (2) according to claim 8, **characterised in that** the first filter step (3) is a spin dust collector.

10. Prefilter element (2) according to one of the preceding claims, **characterised in that** this has at least one subsequent filter (4).

## Revendications

1. Elément préfiltre (2) destiné à être utilisé avant un filtre fin, à matériau de filtre non tissé (7), disposé à travers une section transversale de l'élément préfiltre (2), circulant en rotation dans celui-ci pour le filtrage, **caractérisé en ce que** le matériau de filtre non tissé (7) constitue une boucle sans fin, qui est disposée tendue au moins autour d'une première (6) et d'une deuxième (5) courbe tout en étant en rotation et que l'élément préfiltre (2) comprend un dispositif pour la compression du matériau de filtre non tissé (7) qui se compose de la première et/ou deuxième courbe (5, 6) et d'un moyen de compression (8) qui est disposé en face de la première et/ou deuxième courbe (5, 6) pour comprimer le matériau de filtre non tissé (7).

2. Elément préfiltre (2) selon la revendication 1, **caractérisé en ce que** la première et/ou deuxième courbe (5, 6) sont conçues sous forme de rouleaux de guidage et que le moyen de compression (8) est un rouleau de compression.

3. Elément préfiltre (2) selon la revendication 1 ou 2, **caractérisé en ce que** la première courbe (6) est un entraînement pour la rotation du matériau de filtre non tissé (7) à travers la section transversale de l'élément préfiltre (2) .

4. Elément préfiltre (2) selon la revendication 1 ou 2, **caractérisé en ce que** la première (6) et la deuxième courbe (5) sont mobiles l'une par rapport à l'autre et peuvent être bloquées au niveau de la distance l'une par rapport à l'autre.

5. Elément préfiltre (2) selon l'une quelconque des revendications précédentes, **caractérisé en ce que** le dispositif pour comprimer le matériau de filtre non tissé (7) est disposé sur un point de retour, inférieur en matière de force de gravité, du matériau de filtre non tissé (7) en rotation.

6. Elément préfiltre (2) selon l'une quelconque des revendications 1 à 5, **caractérisé en ce que** le moyen de compression (8) peut être placé dans une position de compression, peut être en particulier basculé.

7. Elément préfiltre (2) selon la revendication 5 ou 6, **caractérisé en ce que** le moyen de compression (8) est disposé au voisinage du point de retour inférieur sur une face sur laquelle le matériau de filtre non tissé (7) circule de nouveau à un point de retour supérieur.

8. Elément préfiltre (2) selon l'une quelconque des revendications précédentes, **caractérisé en ce que** l'élément préfiltre (2) possède au moins une première étape de filtrage (3) disposée antérieurement.

9. Elément préfiltre (2) selon la revendication 8, **caractérisé en ce que** la première étape de filtrage (3) est un cyclone.

10. Elément préfiltre (2) selon l'une quelconque des revendications précédentes, **caractérisé en ce que** celui-ci possède au moins un filtre placé postérieurement (4).
